# EUROPEAN PATENT SPECIFICATION

(11) **EP 2 937 061 B1**
(45) Date of publication and mention of the grant of the patent: **14.06.2017**
(21) Application number: 14165368.3
(22) Date of filing: 22.04.2014
(51) Int. Cl.: A61C 8/00

(54) **Implant having a bone growth powder/biomedical filler rotary push structure**
Implantat mit rotierender Push-Struktur mit Knochenwachstumspulver/biomedizinischem Füllstoff
Implant comprenant une structure à poussoir rotative de poudre de croissance osseuse/ charge biomédicale

(43) Date of publication of application: 28.10.2015
(73) Proprietor: Star Generation Limited Taiwan Branch, Taipei City (TW)
(72) Inventor: Chen, Chun-Leon, 24449 New Taipei City (TW)
(74) Representative: Schwerbrock, Florian

(56) References cited:
- EP-A1- 2 656 813
- US-A1- 2009 258 328
- US-A1- 2010 009 316

## Description

### BACKGROUND OF THE INVENTION

### 1. Field of the Invention:

The present invention relates to dental implant technology and more particularly, to an implant having a bone growth powder/biomedical filler rotary push structure that can be conveniently and rapidly driven into the dental bone to simultaneously propel the applied bone growth powder/biomedical filler into place, assuring a high level of implant reliability.

### 2. Description of the Related Art:

After a dental implant, lateral torque acted upon the implant can increase stress levels. Therefore, the angle of implant implantation direction is very important. Further, the thickness of the cortical bone is also an important factor in a dental implant procedure. Increasing the cortical bone thickness can reduce the stress value around the implant. Therefore, in a typically dental implant procedure, prior to installation of the dental implant, the dentist will check the conditions of the gum. If the thickness of cortical bone is insufficient, a bone growth powder/biomedical filler must be supplemented to lift the thickness of the cortical bone. The existing method is to lift the thickness of the cortical bone is achieved by making a drill hole in the cortical bone by osteotomy, and then filling a bone growth powder/biomedical filler into the drill hole, so as to increase the thickness of the cortical bone and to facilitate the follow-up implant installation procedure.

An early bone growth powder/biomedical filler filling tool for dental implant comprises a push pin at the end of a handle for pushing the applied bone growth powder/biomedical filler from the drill hole in the cortical bone. However, this bone growth powder/biomedical filler filling tool is not convenient to operate. It takes much time to fill the applied bone growth powder/biomedical filler into the crevice between the cortical bone and the sinus floor with this design of bone growth powder/biomedical filler filling tool. Operating this bone growth powder/biomedical filler filling tool is a big burden to the dentist and can make the patient feel uncomfortable.

In an advanced dental implant surgery, an improved design of implant capable of propelling the applied bone growth powder/biomedical filler can be used to help the dentist reduce fatigue and shorten the period the patients feel uncomfortable.

An implant capable of pushing the applied bone growth powder/biomedical filler into place generally has spiral grooves for cutting the bone and propelling the applied bone growth powder/biomedical filler. However, because the dental bone has different widths at different locations, implanting different sizes of implants having the same bone growth powder/biomedical filler propelling structure at different width locations at the dental bone can seriously affect the ease of implantation and the degree of implant appropriateness. US 2010/009316 A1 discloses a dental implant according to the preamble of claim 1.

### SUMMARY OF THE INVENTION

The present invention has been accomplished under the circumstances in view. It is one object of the present invention to provide an implant that can be conveniently and rapidly driven into the dental bone to simultaneously propel the applied bone growth powder/biomedical filler into place, assuring a high level of implant reliability.

To achieve this and other objects of the present invention, an implant in accordance with claim 1 is provided. The diameter of the implant root is 5.25mm, the number of the spiral grooves is 4, and therefore the ratio between the diameter of the implant root and the number of the spiral grooves is 1.3125.

Further, the positioning thread and the spiral groove can extend in the same direction, or alternatively in reversed directions.

### BRIEF DESCRIPTION OF THE DRAWINGS

FIG. 1 is an oblique top elevational view of an implant.
FIG. 2 is a front view of the implant shown in FIG. 1.
FIG. 3 is a top view of the implant shown in FIG. 1.
FIG. 4 is a sectional view taken along line 3-3 of FIG. 3.
FIG. 5 is a front view of an implant.
FIG. 6 is a top view of the implant shown in FIG. 5.
FIG. 7 is a front view of an implant in accordance with a third embodiment of the present invention.
FIG. 8 is a top view of the implant shown in FIG. 7.
FIG. 9 is a schematic drawing illustrating different alternate forms of implants constructed and installed in different bone width locations.
FIG. 10 is an oblique top elevational view of an implant.

### DETAILED DESCRIPTION OF THE PREFERRED EMBODIMENT

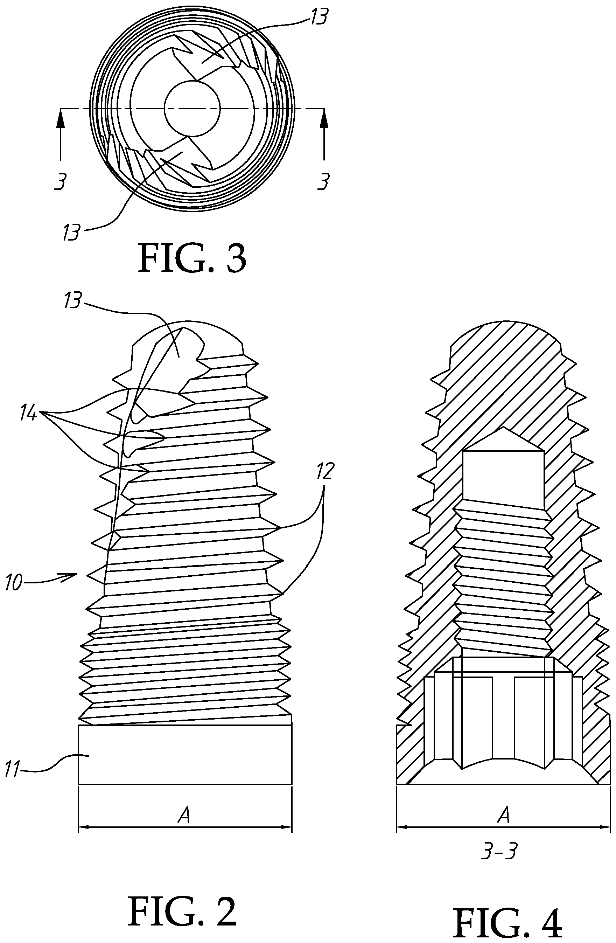

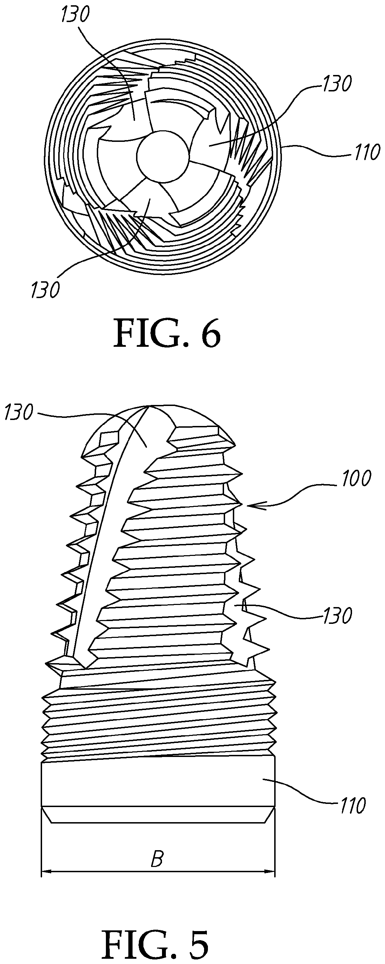

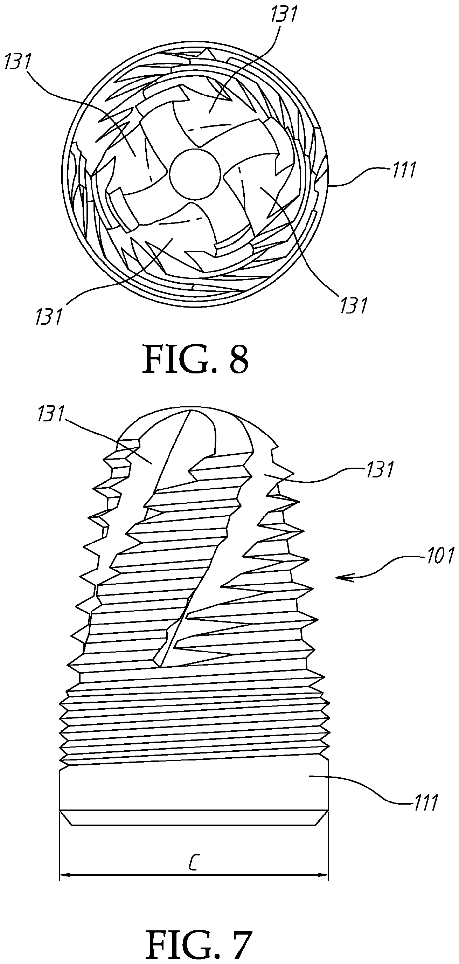

Referring to FIGS. 3-6, an implant **10** is shown. The multi-size implant **10** is prepared from zirconium dioxide, comprising an implant root **11** located at a bottom side thereof. The implant root **11** has a predetermined diameter **A** in the range of 3mm∼7mm to fit different dental widths. The diameter **A** of the implant root **11** in this first embodiment is 3.75mm. The diameter **B** of the implant root **110** in a second embodiment of the present invention as shown in FIGS. 5 and 6 is 4.5mm. The diameter **C** of the implant root **111** in an embodiment of the present invention as shown in FIGS. 7 and 8 is 5.25mm.

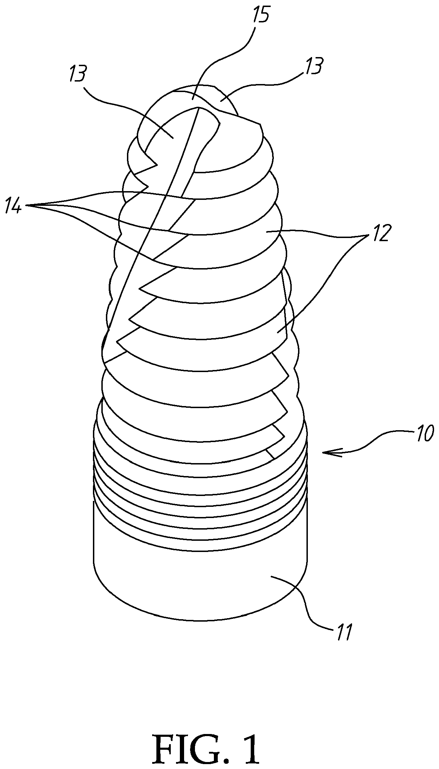

Referring to FIGS. 1-4 again, the multi-size implant **10** comprises the aforesaid implant root **11** at the bottom side thereof, a positioning thread **12** spirally upwardly extended around the periphery thereof and gradually reducing in width in direction from the implant root **11** toward an opposing top side thereof to form a gum-drilling structure, a plurality of, for example, two spiral grooves **13** equiangularly and upwardly extending around the periphery thereof across the positioning threads **12** to form a plurality of cutting edges **14** at the positioning thread **12** at different elevations, and an arc top **15** located at the top side thereof. The implant **10** can be driven by a tool (not shown) and positioned in the cortical bone and simultaneously propel the applied bone growth powder/biomedical filler. In this embodiment, which is not part of the present invention, the positioning thread **12** and the spiral groove **13** spirally extend in the same direction. In this embodiment, which is not part of the present invention, the positioning thread spirally extends around the periphery of the implant **10** from the top side toward the implant root **11** in clockwise direction, and the spiral groove **13** also extends spirally downwardly in clockwise direction.

The main characteristic is that the ratio between the diameter **A** of the implant root **11** of the implant **10** and the number of the spiral grooves **13** is in the range of 1.2∼2.0. In this first embodiment, which is not part of the present invention, the diameter **A** of the implant root **11** is 3.75mm, the number of the spiral grooves **13** is 2, and therefore the ratio between the diameter **A** of the implant root **11** of the implant **10** and the number of the spiral grooves **13** is 1.875.

In the second embodiment which is not part of the present invention, as shown in FIGS. 5 and 6, the diameter **B** of the implant root **110** is 4.5mm, the number of the spiral grooves **130** is 3, and therefore the ratio between the diameter **B** of the implant root **110** of the implant **100** and the number of the spiral grooves **130** is 1.5.

In an embodiment of the present invention, as shown in FIGS. 7 and 8, the diameter **C** of the implant root **111** is 5.25mm, the number of the spiral grooves **131** is 4, and therefore the ratio between the diameter **C** of the implant root **111** of the implant **101** and the number of the spiral grooves **131** is 1.3125.

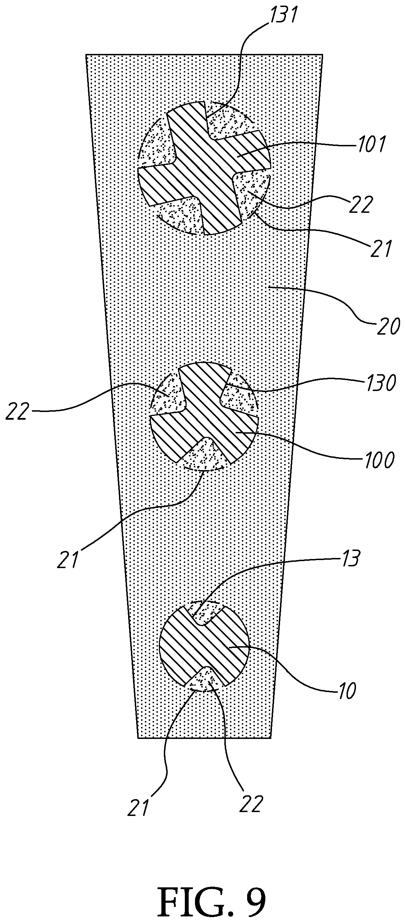

Referring to FIG. 9, different sizes of implants **10**, **100**, **101** having different numbers of spiral grooves **13**, **130**, **131** can be driven into respective drill holes **21** that are made by osteotomy in the dental bone **20** at different bone width locations. Subject the design of the spiral grooves **13**, **130**, **131** and arc top **15**, the applied bone growth powder/biomedical filler **22** is simultaneously pushed into place.

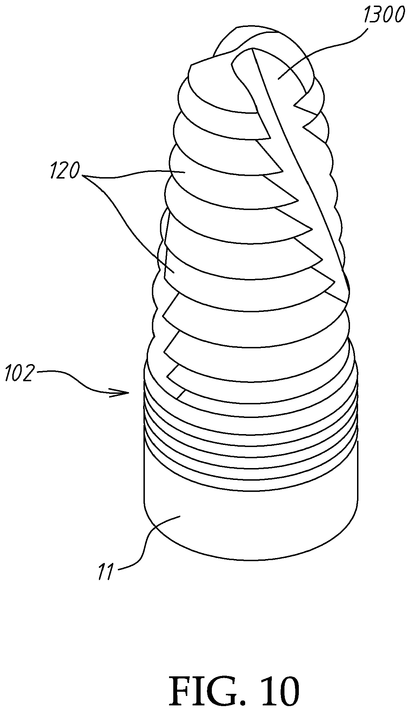

Referring to FIG. 10, an implant **102** is shown. In this fourth embodiment, which is not part of the present invention, the positioning thread **120** and the spiral grooves **1300** extend in reversed directions, i.e., if the positioning thread **120** shown in the drawing extends spirally downwardly in clockwise direction, the spiral groove **1300** extends spirally downwardly in counter-clockwise direction. Thus, when driving the implant **102** into the dental bone, the positioning thread **120** imparts a further propelling force in the direction of the implantation.

The implants **10**, **100**, **101** have different numbers of spiral grooves **13**, **130**, **131** and can be installed in the dental bone at different bone width locations to provide different numbers of spiral channels and cutting edges **14**, facilitating quick and accurate implant positioning and bone growth powder/biomedical filler propelling, and assuring a high level of implant reliability. Accordingly, the invention is not to be limited except as by the appended claims.

## Claims

1. An implant (10), comprising an implant base having a predetermined diameter, a positioning thread (12) spirally upwardly extended around the periphery thereof and gradually reducing in width in direction from said implant root toward an opposing top side thereof to form a gum-drilling structure, a plurality of spiral grooves equiangularly and upwardly extending around the periphery thereof across said positioning thread (12) to form a plurality of cutting edges (14) at the positioning thread (12) at different elevations, and an arc top (15) located at the top side thereof, **characterized in that** the diameter of said implant root (111) is 5.25mm, the number of said spiral grooves (131) is 4, and therefore the ratio between the diameter of said implant root (111) and the number of said spiral grooves (131) is 1.3125.

2. The implant as claimed in claim 1, wherein said positioning thread (12) and said spiral groove (13) extend in the same direction.

3. The implant as claimed in claim 1, wherein said positioning thread (120) and said spiral groove (1300) extend in reversed directions.

## Patentansprüche

1. Implantat (10) mit einem Implantatsockel mit einem vorbestimmten Durchmesser, einem Positionierungsgewinde (12), das sich spiralförmig um die Peripherie davon nach oben erstreckt und das sich in der Breite fortschreitend von der Implantatwurzel bis zum gegenüberliegenden Ende davon verringert, um eine Bohrstruktur zu bilden, mehreren spiralförmigen Nuten, die sich gleichwinklig nach oben um die Peripherie davon über das Positionierungsgewinde (12) entlang erstrecken, um mehrere Schneidkanten (14) in verschiedenen Höhen am Positionierungsgewinde (12) zu bilden, und einer bogenförmigen Spitze (15) am oberen Ende davon, **dadurch gekennzeichnet, dass** der Durchmesser der Implantatwurzel (111) 5,25 mm beträgt und es vier spiralförmige Nuten (131) gibt und daher das Verhältnis zwischen dem Durchmesser der Implantatwurzel (111) und der Anzahl der spiralförmigen Nuten (131) 1,3125 beträgt.

2. Implantat nach Anspruch 1, wobei sich das Positionierungsgewinde (12) und die spiralförmige Nut (13) in die gleiche Richtung erstrecken.

3. Implantat nach Anspruch 1, wobei sich das Positionierungsgewinde (120) und die spiralförmige Nut (130) in entgegengesetzte Richtungen erstrecken.

## Revendications

1. Un implant (10), comprenant une base d'implant ayant un diamètre prédéterminé, un filetage de positionnement (12) prolongé en spirale vers le haut autour de sa périphérie et diminuant progressivement en largeur dans le sens allant de la dite racine d'implant à une face supérieure opposée de celle-ci pour former une structure de forage de la gomme, une pluralité de gorges en spirale s'étendant équiangulairement et vers le haut autour de leur périphérie en passant par le dit filetage de positionnement (12) pour former une pluralité d'arêtes coupantes (14) au niveau du filetage de positionnement (12) à différentes élévations, et un sommet en arc (15) situé au niveau de sa face supérieure, **caractérisé en ce que** le diamètre de la dite racine d'implant (111) est de 5,25 mm, que les dites gorges en spirale (131) sont au nombre de 4 et que le rapport entre le diamètre de la dite racine d'implant (111) et le nombre des dites gorges en spirale (131) est par conséquent 1,3125.

2. L'implant selon revendication 1, où le dit filetage de positionnement (12) et la dite gorge en spirale (13) s'étendent dans la même direction.

3. L'implant selon revendication 1, où le dit filetage de positionnement (120) et la dite gorge en spirale (1300) s'étendent dans des directions inversées.
